# DEMANDE DE BREVET EUROPEEN

(11) **EP 2 549 404 A1**
(43) Date de publication de la demande: **23.01.2013**
(21) Numéro de dépôt: 12176570.5
(22) Date de dépôt: 16.07.2012
(51) Int. Cl.: G06F 21/86

(54) **Système et procédé pour sécuriser des données à protéger d'un équipement**

(30) Priorité: 19.07.2011 FR 1102256
(71) Demandeur: Thales, 92200 Neuilly Sur Seine (FR)
(72) Inventeur: Marron, Christophe, 49300 CHOLET (FR)
(74) Mandataire: Jacobson, Claude

(57) **Abrégé**

La présente invention concerne un système et un procédé pour sécuriser des données à protéger d'un équipement, l'équipement comprenant : un espace ; au moins un dispositif de traitement (30, 40, 50) des données à protéger, le dispositif de traitement étant agencé dans l'espace ; un module de sécurité (20) comprenant au moins un contrôleur (24) relié à au moins une mémoire (22) pour des données sensibles, les données sensibles donnant accès aux données à protéger, le module de sécurité étant agencé au moins partiellement dans l'espace (10) ; et au moins un capteur de supervision (70, 72, 74) agencé dans l'espace; le procédé comprenant les étapes suivantes - la transmission d'au moins une signature, par le ou les capteurs, au module de sécurité (20), la signature étant basée sur un signal reçu par le capteur respectif et donnant une information sur l'état physique de l'espace (10) ; la comparaison dans le module de sécurité (20) d'au moins l'une des signatures et/ou une valeur déduite d'au moins l'une des signatures avec au moins une valeur de référence et/ou au moins une signature de référence ; la limitation d'accès aux données à protéger basée sur la comparaison d'au moins l'une des signatures.

## Description

La présente invention concerne un système pour sécuriser des données à protéger d'un équipement comprenant :
- un espace;
- au moins un dispositif de traitement des données à protéger, le ou les dispositifs de traitement étant agencés dans l'espace ; et
- un module de sécurité comprenant au moins un contrôleur relié à au moins une mémoire pour des données sensibles, les données sensibles donnant accès aux données à protéger, le module de sécurité étant agencé au moins partiellement dans l'espace.

En outre, la présente invention concerne un procédé pour sécuriser des données à protéger d'un équipement, l'équipement comprend :
- un espace ;
- au moins un dispositif de traitement des données à protéger, le dispositif de traitement étant agencé dans l'espace ;
- un module de sécurité comprenant au moins un contrôleur relié à au moins une mémoire pour des données sensibles, les données sensibles donnant accès aux données à protéger, le module de sécurité étant agencé au moins partiellement dans l'espace.

Par exemple les données à protéger doivent être protégées contre un piégeage.

Un piégeage peut consister à mettre en oeuvre des sondes pour capter des informations, par exemple des données ou logiciels, ou à réaliser des modifications internes dans un équipement qui détournent son fonctionnement ou les données de l'équipement.

Il existe plusieurs solutions dans des systèmes actuels.

Une solution est un scellé placé sur un boîtier renfermant, par exemple une étiquette holographique, qui permet de vérifier de l'extérieur si le boîtier de l'équipement a été ouvert sans autorisation. Le scellé change visuellement l'état irréversiblement lors d'une ouverture du boîtier de l'équipement. Une reproduction illicite d'un scellé est normalement difficilement possible.

Cette solution a l'inconvénient de ne détecter l'intrusion que lorsqu'un opérateur de confiance voit le scellé modifié après l'intrusion. En outre, cela n'empêche pas nécessairement l'accès aux informations dans l'équipement. D'autres mécanismes sont en général nécessaires pour compléter la protection. Les solutions de scellés sont passives et ne permettent à elles-seules que l'audit d'une attaque réalisée. Elles n'empêchent pas le piégeage en soi.

Une autre solution est un système qui détecte des perçages, par exemple divulguée dans EP 0 347 209 A2 et US 5,539,379. Ces solutions sont basées sur une enveloppe qui entoure l'ensemble de la cible considérée. Cette enveloppe intègre un maillage conducteur qui détecte tout perçage et il est très difficile de le contourner. Lors d'une détection de perçage, un dispositif à l'intérieur déclenche une alarme, détruit ou efface un objet à l'intérieur de l'enveloppe. Néanmoins, ce système reste coûteux et ne permet pas, en général, de protéger un équipement de volume important. Or, beaucoup d'équipements comportent plusieurs cartes, compartiments et ont des formes diverses. Les solutions d'enveloppes de détection actuelles apportent des solutions pour des modules limités en volume, par exemple de l'ordre de 10cm * 10cm * 10cm. Au-delà de ces dimensions, cette technologie devient difficile à mettre en oeuvre.

Il existe aussi des composants électroniques comme des microcontrôleurs qui intègrent des solutions de détection d'attaque comme le perçage. Ces composants sont limités dans leur performance et ne sont pas adaptables à différents types d'équipements qui utilisent des microprocesseurs de dernière génération pour obtenir les performances en temps réel d'un logiciel sensible.

Par ailleurs, il existe actuellement des systèmes qui intègrent des capteurs de détection d'ouverture. Ces systèmes déclenchent une alarme lors d'ouverture de l'une des trappes ou portes d'accès. Ils sont inefficaces face à des attaques de type d'intrusion, par exemple par un perçage ou une autre solution de contournement des systèmes d'ouverture normaux de l'équipement.

Par manque d'autonomie d'alimentation dans les équipements, les capteurs actuels sont peu efficaces, et notamment les capteurs d'ouverture. Le fait de devoir fonctionner hors tension élimine de nombreux systèmes de capteurs qui consomment trop.

Généralement, les systèmes de détection d'intrusion actuels ne sont pas très adaptés aux différentes formes d'un équipement, et en plus les systèmes doivent fonctionner hors tension.

Le but de la présente invention est de surmonter les inconvénients de l'état de la technique, en particulier de protéger contre le piégeage un volume interne important d'un équipement.

A cette fin, l'invention propose un système pour sécuriser des données à protéger d'un équipement comprenant:
- un espace ;
- au moins un dispositif de traitement pour traiter les données à protéger, le ou les dispositifs de traitement étant agencés dans l'espace ; et
- un module de sécurité comprenant au moins un contrôleur relié à au moins une mémoire pour des données sensibles, les données sensibles donnant accès aux données à protéger, le module de sécurité étant agencé au moins partiellement dans l'espace, caractérisé par
au moins un capteur de supervision agencé dans l'espace, le ou chaque capteur étant relié au contrôleur du module de sécurité pour lui envoyer une signature basée sur un signal reçu par le capteur respectif, la signature donnant une information sur l'état physique de l'espace, le contrôleur étant propre à limiter l'accès aux données à protéger sur la base d'une comparaison d'au moins l'une des signatures et/ou d'une valeur déduite d'au moins l'une des signatures avec au moins une valeur de référence et/ou au moins une signature de référence.

Selon des caractéristiques avantageuses :
- la limitation de l'accès aux données à protéger comprend la destruction des données sensibles et/ou la non-diffusion des données sensibles en dehors du module de sécurité ;
- le module de sécurité comprend au moins un dispositif de détection d'une intrusion pour détecter une intrusion dans le module de sécurité, le dispositif de détection d'une intrusion étant propre à provoquer une destruction et/ou un effacement des données sensibles stockées dans la mémoire lors d'une intrusion dans le module de sécurité ;
- au moins l'un des dispositifs de traitement est agencé à l'extérieure du module de sécurité ;
- les données sensibles comprennent les données à protéger ou les données sensibles sont une clé pour déchiffrer et/ou chiffrer les données à protéger, lesquelles données à protéger sont stockées en dehors du module de sécurité sous forme chiffrée ;
- chaque dispositif de traitement est propre à effacer les données à protéger qui sont traitées sur le dispositif respectif sur la base de la comparaison d'au moins l'une des signatures et/ou d'une valeur déduite d'au moins l'une des signatures avec au moins une valeur de référence et/ou au moins une signature de référence, ou est propre à effacer lors de la mise hors tension des dispositifs de traitement les données à protéger qui sont traitées sur le dispositif respectif ; et/ou
- chaque dispositif de traitement est propre à transférer les données à protéger qui sont traitées sur le dispositif respectif au module de sécurité sur la base de la comparaison d'au moins l'une des signatures et/ou d'une valeur déduite d'au moins l'une des signatures avec au moins une valeur de référence et/ou au moins une signature de référence, ou est propre à transférer les données à protéger qui sont traitées sur le dispositif respectif au module de sécurité lors de la mise hors tension des dispositifs de traitement.

En outre, l'invention propose un procédé pour sécuriser des données à protéger d'un équipement, l'équipement comprend :
- un espace ;
- au moins un dispositif de traitement des données à protéger, le dispositif de traitement étant agencé dans l'espace ;
- un module de sécurité comprenant au moins un contrôleur relié à au moins une mémoire pour des données sensibles, les données sensibles donnant accès aux données à protéger, le module de sécurité étant agencé au moins partiellement dans l'espace ; et au moins un capteur de supervision agencé dans l'espace;
   le procédé comprenant les étapes suivantes
- la transmission d'au moins une signature, par le ou les capteurs, au module de sécurité, la signature étant basée sur un signal reçu par le capteur respectif et donnant une information sur l'état physique de l'espace ;
- la comparaison dans le module de sécurité d'au moins l'une des signatures et/ou une valeur déduite d'au moins l'une des signatures avec au moins une valeur de référence et/ou au moins une signature de référence ;
- la limitation d'accès aux données à protéger basée sur la comparaison d'au moins l'une des signatures.

Selon des caractéristiques avantageuses :
- la limitation de l'accès aux données à protéger comprend, la destruction des données sensibles et/ou la non-diffusion des données sensibles en dehors du module de sécurité ;
- le procédé comprend en outre l'étape suivante : l'émission d'au moins un signal qui traverse au moins partiellement l'espace pour être reçu par au moins l'un des capteurs, la signature étant déduit de ce signal reçu ; et/ou
- le module de sécurité comprend au moins un dispositif de détection d'une intrusion pour détecter une intrusion dans le module de sécurité, le procédé comprenant en outre l'étape suivante : la destruction ou l'effacement des données sensibles dans la mémoire lorsque le dispositif de détection d'intrusion détecte une intrusion dans le module de sécurité.

D'autres caractéristiques et avantages de la présente invention ressortiront de la description faite ci-dessous, en référence aux dessins qui illustrent un exemple de réalisation dépourvu de tout caractère limitatif et dans lequel :
- la Figure 1 est une vue schématique d'un système selon un mode de réalisation de l'invention,
- la Figure 2 est un organigramme d'un procédé selon un mode de réalisation de l'invention,
- la Figure 3 est un organigramme d'un procédé selon un autre mode de réalisation de l'invention, et
- la Figure 4 est une vue schématique d'un système selon un autre mode de réalisation de l'invention.

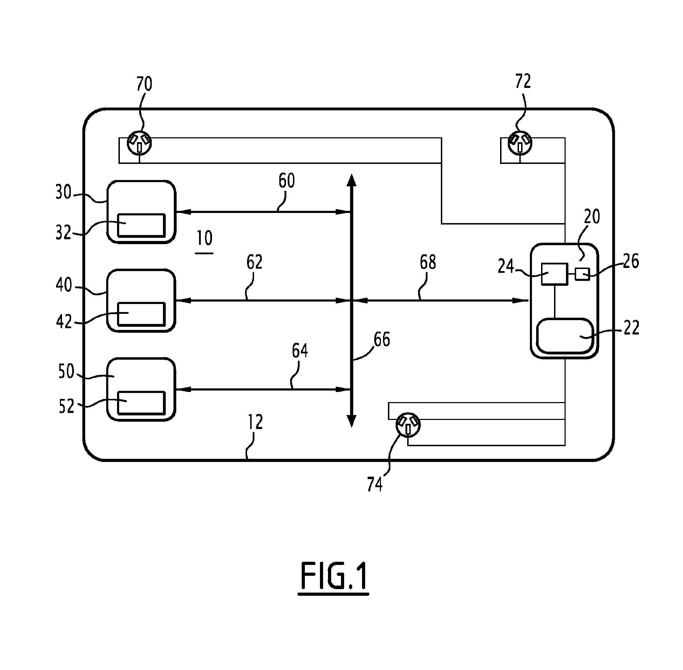

La Figure 1 montre schématiquement un mode de réalisation d'un système selon l'invention intégré dans un équipement. Le système est conçu pour protéger les données traitées par l'équipement. Par exemple, les données à protéger sont des logiciels et/ou des données qui sont traitées par les logiciels de l'équipement.

Le système comprend un espace 10 à surveiller qui est limité par une enceinte 12, par exemple une paroi d'un boîtier. L'espace 10 a un volume relativement grand, par exemple supérieur à 1 litre. L'espace 10 n'est pas limité à un parallélépipède. L'enceinte 12 sépare l'intérieur de l'espace 10 d'un volume extérieur non sécurisé.

Le système comprend un module de sécurité 20 qui est agencé à l'intérieur de l'espace 10. Le module de sécurité a un volume restreint, par exemple inférieur à 1 litre.

Dans le mode de réalisation de la Figure 1, le module de sécurité 20 dispose intérieurement d'une mémoire 22 pour stocker des données sensibles, un contrôleur 24 et un dispositif 26 de détection d'une intrusion dans le module de sécurité qui est toujours actif, en particulier même si le module de sécurité 20 n'est plus alimenté en courant.

Dans le mode de réalisation de la Figure 1, les données sensibles sont les données traitées par l'équipement. Le dispositif de détection d'une intrusion 26 fonctionne au moins temporairement sans une alimentation extérieure en électricité grâce à un stockage d'énergie propre.

Dans un mode de réalisation, le dispositif de détection d'une intrusion 26 est une enveloppe de sécurité qui comprend un maillage conducteur qui entoure complètement le module de sécurité 20. Le dispositif de détection d'intrusion 26 détecte toute tentative d'intrusion dans le module de sécurité 20, par exemple si quelqu'un essaie de percer un trou pour accéder aux données à protéger. Dans ce cas, le dispositif de détection d'intrusion 26 mesure une variation de la résistance électrique du maillage conducteur et il détruit les données sensibles stockées dans la mémoire 22 en cas de détection de variation de la résistance. Les données sensibles sont effacées ou détruites en utilisant l'énergie propre du module de sécurité.

Dans un autre mode de réalisation, le module de sécurité 20 est intégré dans un composant électronique dans lequel le dispositif de détection d'intrusion 26 détecte également toute tentative d'accès ou piégeage et détruit en cas de tentative d'accès les données à protéger stockées dans le composant.

Plusieurs cartes de traitement de données 30, 40, 50 sont agencées dans l'espace 10 et disposent chacune de moyens de traitement comme un contrôleur et des mémoires 32, 42, 52 respectivement. Les cartes de traitement de données 30, 40, 50 traitent les données à protéger et constituent un dispositif de traitement.

Les données à protéger circulent à l'intérieur de l'espace 10 par des connexions de communication 60, 62, 64, 66, 68, par exemple des bus, pour échanger ou transférer les données à traiter entre les cartes de traitement 30, 40, 50 ou entre les cartes de traitement 30, 40, 50 et le module de sécurité 20. Les connexions de communication entre le module de sécurité 20 et les dispositifs de traitement de données 30, 40, 50 sont agencées dans l'espace 10. Les cartes de traitement 30, 40, 50 sont propres à recevoir les données à protéger du module de sécurité 20.

Si l'équipement est mis hors tension, les mémoires 32, 42, 52 oublient ou effacent les données à protéger.

Dans un autre mode de réalisation, les mémoires envoient, avec l'énergie restante, les données à protéger vers le module de sécurité 20 avant d'effacer les données à protéger de leur propre mémoire.

Un ou plusieurs capteurs 70, 72, 74 sont agencés dans l'espace 10 et reliés au module de sécurité 20. Les connexions de communication entre le module de sécurité 20 et le ou les capteurs sont agencées dans l'espace 10.

Les capteurs sont par exemple des émetteurs et/ou récepteurs d'ultra-sons, d'ondes électromagnétiques ou de tout autre type d'onde pour détecter un changement physique ou une intrusion dans l'espace 10. Ils sont positionnés à des endroits et en nombre bien choisis pour rendre la détection recherchée efficace.

Par exemple, chaque capteur 70, 72, 74 est propre à émettre un signal et à détecter un signal reçu. Le signal à émettre est stocké dans le capteur 70, 72, 74 ou est fourni par le module de sécurité 20. Le signal reçu est par exemple un signal réfléchi issu d'un signal émis par le même capteur ou un signal émis par l'un des autres capteurs. Dans un autre mode réalisation, le ou les capteurs détectent un signal reçu qui est émis par un dispositif d'émission indépendant des capteurs.

Dans un mode de réalisation, les capteurs 70, 72, 74 mesurent lors de la détection du signal reçu le temps de propagation, la phase, et/ou la fréquence du signal reçu. Le signal reçu, sa phase, sa fréquence, et/ou son temps de propagation permet de créer une signature du signal par les capteurs 70, 72, 74. Par exemple, la signature est une image de l'espace 10 ou un chiffre calculé à partir d'une image de l'espace 10. La signature est, dans un autre mode de réalisation, le signal reçu en soi, le temps de propagation, la phase, et/ou la fréquence du signal reçu.

Les signatures des capteurs 70, 72, 74 donnent alors une empreinte ou l'état physique de l'espace 10.

Si l'espace 10 est modifié, par exemple parce que quelqu'un a placé une sonde pour enregistrer les données passant par les connexions de communication 60, 62, 64, 66, la signature de l'espace 10 créée par au moins l'un des capteurs 70, 72, 74 change. Un changement de la signature correspond à un changement de l'état physique de l'espace et donc à une intrusion dans l'espace 10.

La signature est envoyée par les capteurs 70, 72, 74 au module de sécurité 20. Typiquement, les capteurs 70, 72, 74 sont mis en place pour avoir une bonne couverture de l'espace 10. De plus, le nombre de capteurs n'est pas limité à trois et est adapté à l'espace 10 à surveiller et à l'encombrement et forme de l'espace. Par exemple, dans un mode de réalisation, le système comprend au moins un capteur.

Le module de sécurité 20 stocke des signatures de référence des capteurs 70, 72, 74 dans la mémoire 22 du module de sécurité. Les signatures de référence sont représentatives de l'équipement sans modification. Les signatures de référence stockées dans la mémoire 22 correspondent à une empreinte ou état physique de l'intérieur de l'équipement sans modification de l'enceinte et sans sondes mises en place. Si cette empreinte de l'espace 10 varie ou change, le module de sécurité 20 détecte qu'une intrusion a eu lieu pendant la période où le système était hors tension par comparaison des empreintes reçues avec les empreintes de références stockées, à la remise sous tension.

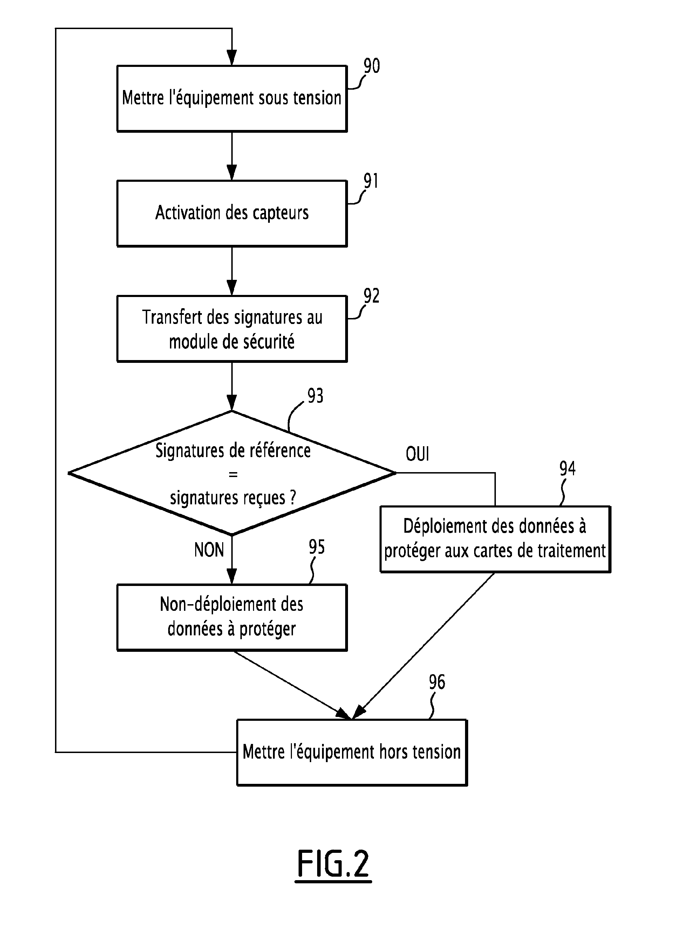

Dans la suite, un procédé selon un mode de réalisation est expliqué à l'aide des Figures 1 et 2.

Lors de la mise en place de l'équipement, les signatures de référence sont enregistrées et stockées dans la mémoire 22.

Quand l'équipement fonctionne normalement, c'est-à-dire quand l'équipement est sous tension, les cartes de traitement 30, 40, 50 traitent les données à protéger, qui sont stockées lors de ce traitement dans les mémoires 32, 42, 52 propres aux cartes de traitement 30, 40, 50. Pendant toute la période de maintien sous tension, les différentes cartes 30, 40, 50 dans l'espace 10, et/ou le module de sécurité 20 échangent l'état de leur configuration et/ou les données à protéger, qui peuvent évoluer, par les connexions de communication 60, 62, 64, 66, 68.

Lorsque le système de la figure 1 est mis hors tension, toutes les données à protéger utilisées dans les cartes de traitement 30, 40, 50 ou dans les mémoires respectives 32, 42, 52 sont effacées ou oubliées. Alors, le seul endroit, où les données à protéger sont encore stockées, est la mémoire 22 du module de sécurité 20.

L'espace 10, à l'exception du module de sécurité 20, est hors surveillance si l'équipement est mis hors tension. Donc, il est possible d'attaquer l'espace 10, par exemple d'ouvrir ou de percer l'enceinte 12. L'attaquant n'a pas accès aux données à protéger, car elles ne sont plus présentes sur les cartes de traitement 30, 40, 50, mais seulement dans le module de sécurité 20.

Si l'attaquant essaie de récupérer les données à protéger depuis le module de sécurité 20, le dispositif de détection d'intrusion 26 détecte cette intrusion et détruit les données à protéger stockées dans la mémoire 22. L'attaquant peut cependant mettre en place des piégeages ou des sondes permettant, à la mise sous tension de l'équipement, de récupérer les données à protéger qui sont normalement transférées sur les connexions de communication 60, 62, 64, 68 et/ou modifier le fonctionnement de l'ensemble de l'équipement. Mais un tel piégeage sera détecté par le système et procédé selon l'invention comme expliqué ci-dessous.

Quand l'équipement est mis sous tension et le module de sécurité 20 démarre à l'étape 90, le module de sécurité 20 établit une connexion avec les capteurs 70, 72, 74 installés dans l'espace 10 et les active (étape 91). Les capteurs 70, 72, 74 émettent des signaux et reçoivent un signal réfléchi comme décrit ci-dessus. Ensuite, les signatures respectives sont transmises au module de sécurité 20 (étape 92). Le module de sécurité compare, lors de l'étape 93, les signatures avec les signatures de référence stockées dans sa mémoire 22. Si l'une des signatures diffère des signatures de référence, cela signifie que l'espace 10 a subi des modifications physiques. Dans un autre mode de réalisation, des valeurs déduites des signatures, par exemples des sommes de contrôles, sont comparées avec au moins une valeur de référence.

Si l'ensemble des signatures reçues est conforme aux signatures de référence ou la différence reste sous un certain seuil prédéterminé, le module de sécurité 20 diffuse, vers les différentes cartes 30, 40, 50 dans l'espace 10, les données à protéger nécessaires à leur fonctionnement (étape 94).

Dans le cas, où la comparaison des signatures reçues est différente des signatures stockées dans la mémoire 22, donc la différence est supérieure au seuil prédéterminé, le module de sécurité 20 bloque les données à protéger dans sa mémoire 22 et ne les distribue plus aux cartes de traitement (étape 95). En variante, le module de sécurité 20 détruit ou efface les données sensibles dans la mémoire 22 et ne les transmet pas. Après cet effacement ou cette destruction, l'équipement ne peut plus fonctionner, car les données à protéger nécessaires pour le traitement dans les cartes 30, 40, 50 sont définitivement perdues.

Dans l'étape 96, l'équipement est mis hors tension et le procédé recommence à nouveau à l'étape 90.

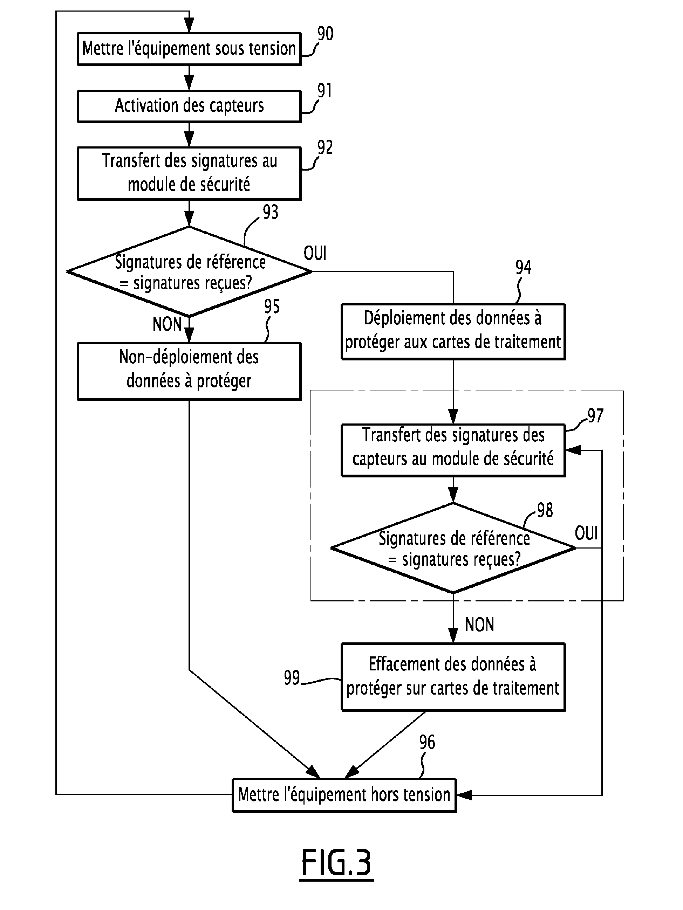

Dans un autre mode de réalisation, qui est expliqué conjointement avec la Figure 3, durant la phase de fonctionnement normale avec les étapes 97 et 98 encadrées avec la ligne pointillée, le module de sécurité 20 fait fonctionner les capteurs 70, 72, 74 afin de détecter toute tentative d'intrusion. Les étapes 90 à 96 sont réalisées comme dans le mode de réalisation de la Figure 2. Dans le mode de réalisation de la Figure 3, les étapes 97 et 98 sont répétées régulièrement durant la phase de fonctionnement normale, pendant laquelle les cartes 30, 40, 50 traitent les données à protéger.

Lors de l'étape 97, le module de sécurité 20 reçoit les signatures des capteurs 70, 72, 74 qui émettent régulièrement des signaux et reçoivent un signal réfléchi comme décrit ci-dessus.

Comme décrit pour l'étape 93, lors de l'étape 98, le module de sécurité compare les signatures reçues avec les signatures de référence stockées dans sa mémoire 22. Si l'une des signatures diffère des signatures de référence, cela signifie que l'espace 10 a subi des modifications physiques.

En cas de détection d'intrusion dans l'espace 10, le module de sécurité 20 demande par une commande lors de l'étape 99 aux cartes de traitement 30, 40, 50 d'effacer en urgence toutes les données à protéger qu'elles possèdent. A la réception de cette commande, les cartes de traitement 30, 40, 50 effectuent cet effacement des données à protéger.

Dans une autre variante, les données à protéger calculées ou modifiées par les cartes de traitement 30, 40, 50 sont encore transférées avec l'énergie et temps restants au module de sécurité 20 avant effacement et sauvegardés dans le module de sécurité 20 si une intrusion est détectée lors de la phase du fonctionnement normale. Lors de l'étape 99, le module de sécurité 20 demande aux cartes de traitement 30, 40, 50 d'émettre vers le module de sécurité les données à protéger qu'ils ont calculées et d'effacer les données à protéger qu'ils possèdent. Les données à protéger sont, dans un mode de réalisation, calculées à partir des données initiales fournies par le module de sécurité.

Dans un autre mode de réalisation, les données à protéger calculées par les cartes de traitement 30, 40, 50 sont envoyées périodiquement au module de sécurité 20. Les cartes de traitement 30, 40, 50 effacent les données à protéger sur réception d'une demande du module de sécurité 20 lorsque le module de sécurité a détecté une intrusion par comparaison des signatures reçues avec les signatures de référence stockées dans sa mémoire 22, par exemple dans l'étape 99. Dans ce mode de réalisation, seulement les données à protéger calculées entre le dernier transfert au module de sécurité et le commande d'effacement par le module de sécurité sont perdues.

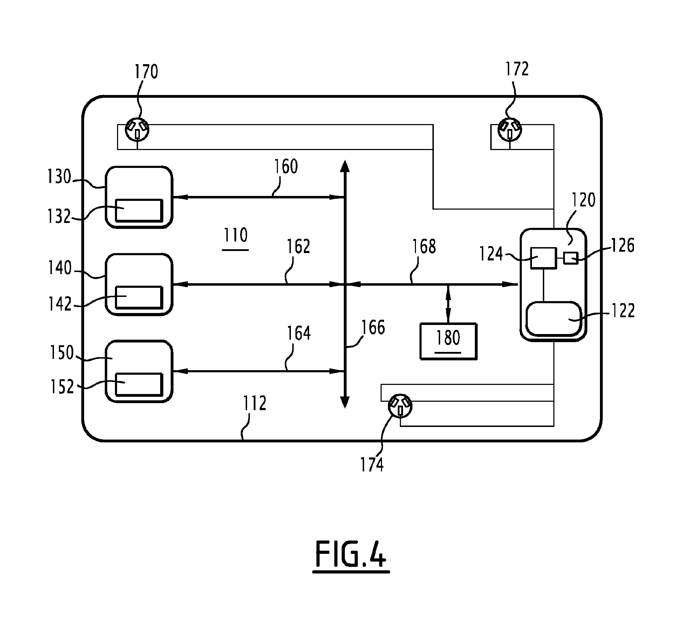

La Figure 4 représente schématiquement une variante du système et procédé selon l'invention. Les numéros de référence sont augmentés par 100 par rapport au mode de réalisation représenté dans la Figure 1. L'équipement est sensiblement identique à l'équipement de la Figure 1, sauf une mémoire 180 agencée dans l'espace 110 à l'extérieur du module de sécurité 120.

Dans le mode de réalisation de la Figure 4, les données sensibles sont différentes des données à protéger. Les données à protéger sont stockées sous forme chiffrée dans la mémoire 180. Une clé pour déchiffrer ces données à protéger est stockée dans la mémoire 122 du module de sécurité 120. La clé forme dans ce mode de réalisation les données sensibles. Seul le module de sécurité 120 est capable de déchiffrer les données à protéger stockées dans la mémoire 180 et de les retransmettre aux cartes 130, 140, 150 après déchiffrement.

Le procédé fonctionne de manière similaire au procédé expliqué en regard de la Figure 2, sauf que dans le cas de la Figure 4, la clé pour déchiffrer les données à protéger constitue les données sensibles. Les données à protéger déchiffrées utilisées dans les cartes de traitement 130, 140, 150 ou dans les mémoires respectives 132, 142, 152 sont effacées ou oubliées lors de la mise hors tension de l'équipement. Cas de détection d'une intrusion lorsque l'équipement est mis sous tension, c'est-à-dire si les signatures reçues et les signatures de référence sont différentes, le module de sécurité 120 efface ou détruit la clé ou n'utilise pas la clé pour un déchiffrement des données à protéger. Après l'effacement ou la destruction de la clé, l'équipement ne peut plus fonctionner, car les données à protéger nécessaires pour le traitement dans les cartes 130, 140, 150 sont inaccessibles.

Dans un mode de réalisation, comme dans le mode de réalisation décrit conjointement avec la Figure 3, durant la phase de fonctionnement normale, le module de sécurité 120 fait fonctionner les capteurs 170, 172, 174 afin de détecter toute tentative d'intrusion. En cas de détection d'intrusion dans l'espace 110, le module de sécurité 120 demande lors de l'étape 99 aux cartes de traitement 130, 140, 150 d'effacer en urgence toutes les données à protéger qu'elles possèdent.

Dans une autre variante, les données à protéger modifiées ou calculées par les cartes de traitement 130, 140, 150 sont sauvegardées sous forme chiffrée dans la mémoire 180 par le module de sécurité si une intrusion est détectée lors de la phase du fonctionnement normale. Par exemple, les cartes de traitement 130, 140, 150 transfèrent les données à protéger à la demande du module de sécurité ou régulièrement au module de sécurité 120 qui les chiffre et stocke dans la mémoire 180.

Dans un mode de réalisation, les dispositifs de traitement sont intégrés dans les capteurs ou les capteurs sont intégrés dans les dispositifs de traitement. Par exemple, les données à protéger peuvent être, dans ce cas, des fonctions mathématiques, qui sont utilisées pour générer d'autres données à protéger à partir des signaux reçus.

Le procédé et le dispositif permettent d'envisager et de protéger des volumes relativement importants. Par exemple, l'espace a un volume supérieur à 2 litres, en particulier supérieure à 10 litres. En effet, les capteurs ne sont utilisés que sous tension, cela permet de mettre en oeuvre différents types de technologie de capteurs consommant ou non et en quantité souhaitée. Cela permet d'utiliser des capteurs beaucoup moins onéreux par rapport à une solution enveloppant complètement l'espace 10 avec un maillage conducteur. Sur la base d'un module de sécurité, l'invention permet de protéger tout type d'équipement, sans contrainte de volume. De plus, l'invention présente une grande efficacité sur des grands volumes, une adaptation à de multiples configurations d'équipement, et un coût limité si l'on possède déjà un module de sécurité.

## Revendications

1. Système pour sécuriser des données à protéger d'un équipement comprenant :
- un espace (10 ; 110) ;
- au moins un dispositif de traitement (30, 40, 50 ; 130, 140, 150) pour traiter les données à protéger, le ou les dispositifs de traitement étant agencés dans l'espace (10 ; 110);et
- un module de sécurité (20 ; 120) comprenant au moins un contrôleur (24 ; 124) relié à au moins une mémoire (22 ; 122) pour des données sensibles, les données sensibles donnant accès aux données à protéger, le module de sécurité étant agencé au moins partiellement dans l'espace (10 ; 110), **caractérisé par**
au moins un capteur de supervision (70, 72, 74 ; 170, 172, 174) agencé dans l'espace, le ou chaque capteur étant relié au contrôleur (24 ; 124) du module de sécurité (20, 120) pour lui envoyer une signature basée sur un signal reçu par le capteur respectif, la signature donnant une information sur l'état physique de l'espace (10 ; 110), le contrôleur (24 ; 124) étant propre à limiter l'accès aux données à protéger sur la base d'une comparaison d'au moins l'une des signatures et/ou d'une valeur déduite d'au moins l'une des signatures avec au moins une valeur de référence et/ou au moins une signature de référence.

2. Système selon la revendication 1, **caractérisé en ce que** la limitation de l'accès aux données à protéger comprend la destruction des données sensibles et/ou la non-diffusion des données sensibles en dehors du module de sécurité (20 ; 120).

3. Système selon la revendication 1 ou 2, **caractérisé en ce que** le module de sécurité comprend au moins un dispositif (26 ; 126) de détection d'une intrusion pour détecter une intrusion dans le module de sécurité (20 ; 120), le dispositif (26 ; 126) de détection d'une intrusion étant propre à provoquer une destruction et/ou un effacement des données sensibles stockées dans la mémoire (22 ; 122) lors d'une intrusion dans le module de sécurité (20 ; 120).

4. Système selon l'une des revendications précédentes, **caractérisé en ce qu'**au moins l'un des dispositifs de traitement (30, 40, 50 ; 130, 140, 150) est agencé à l'extérieure du module de sécurité (20 ; 120).

5. Système selon l'une des revendications précédentes, **caractérisé en ce que** les données sensibles comprennent les données à protéger ou les données sensibles sont une clé pour déchiffrer et/ou chiffrer les données à protéger, lesquelles données à protéger sont stockées en dehors du module de sécurité (20 ; 120) sous forme chiffrée.

6. Système selon l'une quelconques des revendications précédentes, **caractérisé en ce que** chaque dispositif de traitement (30, 40, 50 ; 130, 140, 150) est propre à effacer les données à protéger qui sont traitées sur le dispositif respectif sur la base de la comparaison d'au moins l'une des signatures et/ou d'une valeur déduite d'au moins l'une des signatures avec au moins une valeur de référence et/ou au moins une signature de référence, ou est propre à effacer lors de la mise hors tension des dispositifs de traitement les données à protéger qui sont traitées sur le dispositif respectif.

7. Système selon l'une quelconques des revendications précédentes, **caractérisée en ce que** chaque dispositif de traitement (30, 40, 50 ; 130, 140, 150) est propre à transférer les données à protéger qui sont traitées sur le dispositif respectif au module de sécurité (20 ; 120) sur la base de la comparaison d'au moins l'une des signatures et/ou d'une valeur déduite d'au moins l'une des signatures avec au moins une valeur de référence et/ou au moins une signature de référence, ou est propre à transférer les données à protéger qui sont traitées sur le dispositif respectif au module de sécurité (20 ; 120) lors de la mise hors tension des dispositifs de traitement.

8. Procédé pour sécuriser des données à protéger d'un équipement, l'équipement comprend :
- un espace (10 ; 110) ;
- au moins un dispositif de traitement (30, 40, 50 ; 130, 140, 150) des données à protéger, le dispositif de traitement étant agencé dans l'espace ;
- un module de sécurité (20 ; 120) comprenant au moins un contrôleur (24 ; 124) relié à au moins une mémoire (22 ; 122) pour des données sensibles, les données sensibles donnant accès aux données à protéger, le module de sécurité étant agencé au moins partiellement dans l'espace (10 ; 110) ; et
au moins un capteur de supervision (70, 72, 74 ; 170, 172, 174) agencé dans l'espace; le procédé comprenant les étapes suivantes
- la transmission d'au moins une signature, par le ou les capteurs, au module de sécurité (20 ; 120), la signature étant basée sur un signal reçu par le capteur respectif et donnant une information sur l'état physique de l'espace (10 ; 110) ;
- la comparaison dans le module de sécurité (20 ; 120) d'au moins l'une des signatures et/ou une valeur déduite d'au moins l'une des signatures avec au moins une valeur de référence et/ou au moins une signature de référence ;
- la limitation d'accès aux données à protéger basée sur la comparaison d'au moins l'une des signatures.

9. Procédé selon la des revendications 8, **caractérisé en ce que** la limitation de l'accès aux données à protéger comprend, la destruction des données sensibles et/ou la non-diffusion des données sensibles en dehors du module de sécurité.

10. Procédé selon l'une des revendications 8 à 9, comprenant en outre l'étape suivante :
- l'émission d'au moins un signal qui traverse au moins partiellement l'espace (10 ; 110) pour être reçu par au moins l'un des capteurs, la signature étant déduit de ce signal reçu.

11. Procédé selon l'une des revendications 8 à 10, **caractérisé en ce que** le module de sécurité comprend au moins un dispositif (26 ; 126) de détection d'une intrusion pour détecter une intrusion dans le module de sécurité (20 ; 120), le procédé comprenant en outre l'étape suivante :
- la destruction ou l'effacement des données sensibles dans la mémoire (22 ; 122) lorsque le dispositif de détection d'intrusion (26 ; 126) détecte une intrusion dans le module de sécurité (20 ;120).
